(19) Europäisches Patentamt
European Patent Office
Office européen des brevets

(11) **EP 4 672 755 A1**

(12) **EUROPEAN PATENT APPLICATION**

(43) Date of publication:
**31.12.2025 Bulletin 2026/01**

(21) Application number: **24306011.8**

(22) Date of filing: **25.06.2024**

(51) International Patent Classification (IPC):
**H04N 19/70** (2014.01)    **G06N 3/045** (2023.01)
**G06N 3/0464** (2023.01)    **G06T 9/00** (2006.01)

(52) Cooperative Patent Classification (CPC):
**H04N 19/70; G06N 3/045; G06N 3/0464;
G06T 9/001; G06T 9/002**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **SCHNITZLER, Francois
  56890 SAINT AVE (FR)**
• **GALPIN, Franck
  35235 THORIGNE-FOUILLARD (FR)**
• **LAMBERT, Anne
  35250 SAINT-AUBIN-D'AUBIGNE (FR)**

(74) Representative: **Interdigital
Immeuble ZEN 2
845 A, avenue des Champs Blancs
35510 Cesson-Sévigné (FR)**

(54) **SIGNALING FOR FEATURE-BASED IMPLICIT NEURAL REPRESENTATION RECONSTRUCTION**

(57)     A method and an apparatus for signaling high-level syntax of a hybrid INR approach. One or more syntax elements providing for reconstructing at least one part of an image or a 3D object using at least one hybrid Implicit Neural Representation network are obtained. The at least one hybrid Implicit Neural Representation network comprises at least one mapping transformation that maps input coordinates of the image or 3D object to a group of features and an INR network that takes as input the group of features and outputs values of the image or 3D object at the input coordinates. The obtained one or more syntax elements indicate parameters relating to the at least one mapping transformation and are signaled in a bitstream.

FIG. 4

**Description**

TECHNICAL FIELD

The present embodiments generally relate to image, video and/or 3D scene compression using Feature-based Implicit Neural Representation (INR). The present embodiments relate to a method and an apparatus for encoding, decoding, transmitting metadata used by a decoder for reconstructing a signal encoded using a Feature-based INR network.

BACKGROUND

To achieve high compression efficiency, image and video coding schemes usually employ prediction and transform to leverage spatial and temporal redundancy in the video content. Emerging technology makes use of neural networks. Among them, Implicit Neural Representation (INR) aims at parameterizing a function which takes coordinates as inputs and outputs values of a signal at these coordinates. INR can be used for instance for compressing image, videos or 3D objects or scene. It can also apply to any type of signal. Approaches are known to construct an INR network for encoding 2D or 3D images. Approaches are also known to compress a neural network. However, any image/video decoder could not reconstruct the image or video for display based only on the INR. Additional information is needed to address any image/video decoder for reconstructing an output signal.

SUMMARY

According to an aspect, a method for signaling one or more syntax elements for using a hybrid-INR decoder is provided. The method comprises obtaining the one or more syntax elements that provides for reconstructing at least one part of an image or a 3D object using at least one hybrid INR network, the at least one hybrid INR network comprising at least one mapping transformation that maps input coordinates of the image or 3D object to a group of features and an INR network that takes as input the group of features and outputs values of the image or 3D object at the input coordinates, wherein the one or more syntax elements indicate parameters relating to the at least one mapping transformation, and signaling the one or more syntax elements in a bitstream.

According to another aspect, an apparatus for signaling one or more syntax elements for using a hybrid-INR decoder is provided. The apparatus comprises one or more processors operable to obtain one or more syntax elements providing for reconstructing at least one part of an image or a 3D object using at least one hybrid INR network, the at least one hybrid INR network comprising at least one mapping transformation that maps input coordinates of the image or 3D object to a group of features and an INR network that takes as input the group of features and outputs values of the image or 3D object at the input coordinates, wherein the one or more syntax elements indicate parameters relating to the at least one mapping transformation, and signal the one or more syntax elements in a bitstream.

According to another aspect, a method for decoding one or more syntax elements for using a hybrid-INR decoder is provided. The method comprising decoding the one or more syntax elements that provides for reconstructing at least one part of an image or a 3D object using at least one hybrid INR network, the at least one hybrid INR network comprising at least one mapping transformation that maps input coordinates of the image or 3D object to a group of features and an INR network that takes as input the group of features and outputs values of the image or 3D object at the input coordinates, wherein the one or more syntax elements indicate parameters relating to the at least one mapping transformation, and reconstructing the at least one part of the image or 3D object using the decoded one or more syntax elements. According to another aspect, an apparatus for decoding one or more syntax elements for using an INR decoder is provided. The apparatus comprises one or more processors operable to decode one or more syntax elements providing for reconstructing at least one part of an image or a 3D object using at least one hybrid INR network, the at least one hybrid INR network comprising at least one mapping transformation that maps input coordinates of the image or 3D object to a group of features and an INR network that takes as input the group of features and outputs values of the image or 3D object at the input coordinates, wherein the one or more syntax elements indicate parameters relating to the at least one mapping transformation, and reconstruct the at least one part of the image or 3D object using the decoded one or more syntax elements.

Further embodiments that can be used alone or in combination are described herein.

One or more embodiments also provide a computer program comprising instructions which when executed by one or more processors cause the one or more processors to perform the method for signaling/decoding one or more syntax elements for reconstructing at least one part of an image or a 3D object using at least one hybrid INR network according to any of the embodiments described herein. One or more of the present embodiments also provide a non-transitory computer readable medium and/or a computer readable storage medium having stored thereon instructions for signaling/decoding one or more syntax elements at least one part of an image or a 3D object using at least one hybrid INR network according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

BRIEF DESCRIPTION OF THE DRAWINGS

FIG. 1 illustrates an example of a neural network for Implicit Neural Representation (INR).
FIG. 2 illustrates an example of a method for encoding a signal using an INR.
FIG. 3 illustrates an example of a neural architecture for hybrid-INR.
FIG. 4 illustrates an example of a method for signaling parameters of a hybrid-iNR, according to an embodiment.
FIG. 5 illustrates an example of a method for decoding parameters of a hybrid-iNR, according to an embodiment.
FIG. 6 illustrates an example of a method for reconstructing a signal using on an hybrid-iNR, according to an embodiment.
FIG. 7 illustrates a block diagram of a system within which aspects of the present embodiments may be implemented, according to an embodiment.
FIG. 8 illustrates a block diagram of a system within which aspects of the present embodiments may be implemented, according to another embodiment.
FIG. 9 shows two remote devices communicating over a communication network in accordance with an example of the present principles.
FIG. 10 shows the syntax of a signal in accordance with an example of the present principles.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

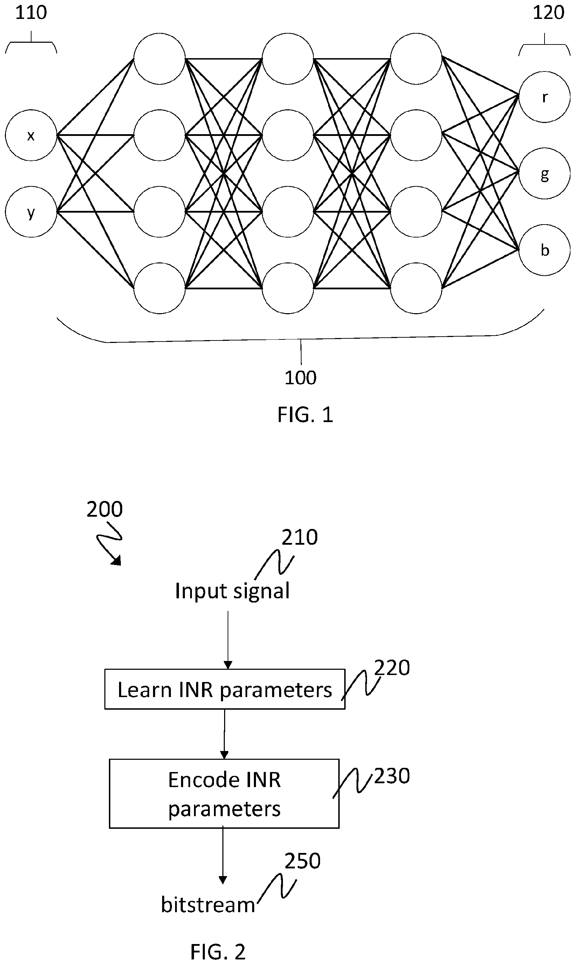

The aspects described and contemplated in this application can be implemented in many different forms. FIGs. 1-10 below provide some embodiments, but other embodiments are contemplated and the discussion of FIGs. 1-10 does not limit the breadth of the implementations.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Unless indicated otherwise, or technically precluded, the aspects described in this application can be used individually or in combination.

At least one of the aspects generally relates to image, video or 3D object encoding and decoding using Implicit Neural Representation (INR). More generally, at least one of the aspects described herein relates to using a hybrid-INR for encoding/decoding any signal representative of an image, a video or a 3D object.

At least one other aspect generally relates to transmitting a bitstream generated or encoded. These and other aspects can be implemented as a method, an apparatus, a computer readable storage medium having stored thereon instructions for encoding or decoding data signal representative of an image, a video or a 3D object according to any of the methods described, and/or a computer readable storage medium having stored thereon a bitstream generated according to any of the methods described.

Studies on INR (INR stands for Implicit Neural Representation) focuses for 2D (image) and video compression, but INR is investigated for many other signals, in particular 3D scenes or objects. Furthermore, these approaches have a far lower computational complexity than, for example, auto-encoder based neural compression approaches.

FIG. 1 illustrates an example of a neural network used for Implicit Neural Representation (INR). Such a neural network used for INR can be referred to as an INR network. INR parameterizes a signal as a function 100, which takes coordinates 110 as input and outputs values 120 of a signal at these coordinates. INR has recently been applied to image, videos or 3D objects among other applications. In the image case, the inputs 110 can be pixel coordinates (x,y) and the INR may output 120 the color values (r,g,b) or (y,u,v) of the input pixel. The input coordinates may be modified by a transformation before being used as input for the neural network. This transformation can be a Fourier mapping, coordinate transformation, normalization etc. The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

Other kind of inputs can be considered for instance when representing a 3D object or a scene as a volume, using point clouds, meshes, or any other suitable representation of a 3D object or 3D scene. In some variants, the 3D representation can also be animated/dynamic, in other words varying in time.

An INR network 100 is typically a neural network, composed of multiple neural layers, such as fully connected layers. In FIG. 1, the network has four layers. Intermediate outputs are represented by circles. Each neural layer can be described as a function that first multiplies the input by a tensor, adds a vector called the bias and then applies a nonlinear function on the resulting values, also called activation. The shape (and other characteristics) of the tensor and the type of non-linear functions are called the architecture of the network. The values of the tensor and the bias are denoted herein by the term "weights". The weights and, if applicable, the parameters of the non-linear functions, are called the parameters $\theta$ of the network. The architecture and the parameters define a "model". The notation $f_\theta$ is used to denote an INR function parameterized by $\theta$.

FIG. 2 illustrates an example of a process 200 to encode a signal 210 using an INR. At 220, the weights $\theta$ of the INR network are optimized/learned to reconstruct the signal. At 230, the learned weights can be encoded to create the output bitstream 250. For an image $I$ of size $(M \times N)$, the weights $\theta$ can for example be optimized by minimizing the following loss function:

$$Loss = D(I, f_{\boldsymbol{\theta}}) + \lambda\, R(\theta)$$

$D_{MSE} = \frac{1}{MN}\sum_{x,y}(I(x,y) - f_{\boldsymbol{\theta}}(x,y))^2$ , where $D$ is a distortion which quantifies the difference between the predicted (reconstructed) image by $f_\theta$ to the original image $I$, $R$ is the bitrate of the encoded parameters and $\lambda$ a trade-off parameter between $D$ and $R$. $D$ could be any differentiable distortion measure, such as mean squared error as in the second equation. M and N are the width and height of an image. Other metrics such as LPIPS (learned perceptual image patch similarity) can also be used in this case. The optimization of the weights $\theta$ is typically performed by a machine learning approach such as a batch gradient descent method.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs (x,y) for all $x \in \{0,1, ... ,255\}$ and $y \in \{0,1, ... ,255\}$. Other choices are possible, for example to upsample, downsample or extend the original image.

The INR network alone, optimized by an encoder, and potentially encoded by a network compression approach such as Neural Network Compression, is not sufficient to reconstruct the input signal, for example an image, at the decoder. The decoder needs additional information, such as High-Level Syntax describing for example how to infer the INR network. Using one INR network globally for the whole signal makes learning difficult, as all parameters contribute to all values and lead to a large network as it must encode all details of the input signal. A solution that has been proposed to overcome this issue is hybrid INR.

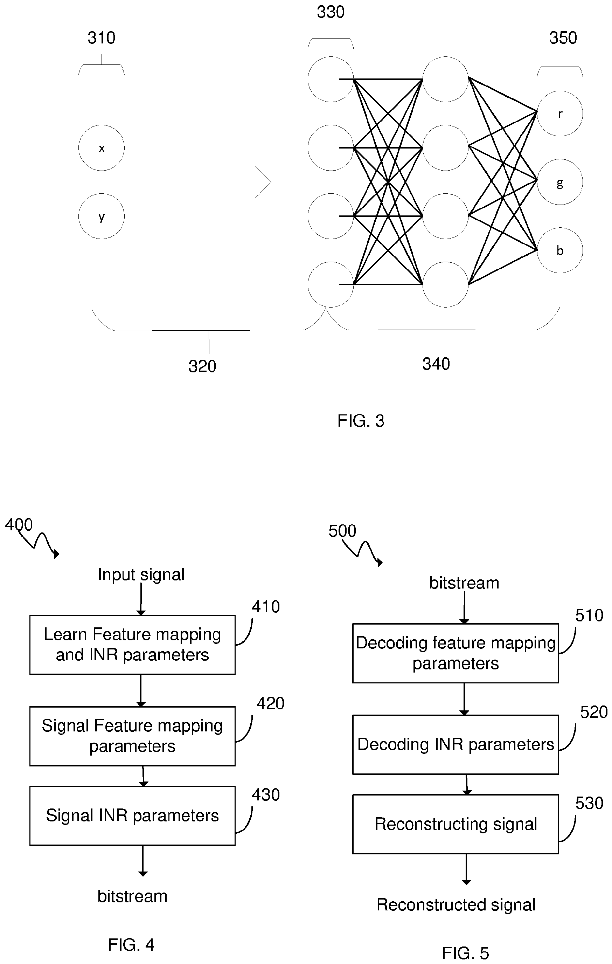

FIG. 3 illustrates an example of a neural architecture typical of such approaches, Hybrid INR. In an hybrid-INR, the input coordinates 310 are first mapped to a vector of features 330. Such a mapping 320 can for example rely on one or more of a lookup table, a partition of the input signal, or a hash function. Multiple mappings may also be done, the associated features are then concatenated. It may also involve interpolation between neighboring vectors of features, for input coordinates that are not directly associated to a vector of features.

The features (330) are then used as input for an INR network (340) that outputs the value (350) of the signal for the input coordinates 310. Using such an architecture rather than a plain INR network helps to handle local features of the input signal. Indeed, the features for a given location are generally completely or mostly independent from features at other coordinates and can be tailored to each location. Encoding a signal using an hybrid-INR is similar to traditional INR: both the network parameters and the features are optimized/learned by minimizing a loss as described above. An example of an hybrid-INR architecture can be found in Ladune 7, Philippe P, Henry F, et al. (2023) Cool-chic: Coordinate-based low complexity hierarchical image codec. Proceedings of the IEEE/CVF International Conference on Computer Vision 13515-13522.

The scientific literature describes several hybrid INR approaches to encode a 2D or 3D image or video. There are also many existing approaches to compress and encode a neural network, such as MPEG Neural Network Compression (NNC) standard.

Using a hybrid-INR for encoding an image, a video or a 3D objects, the parameters of the INR network and the feature values (potentially encoded by the NNC standard) and the training algorithm alone are sufficient to encode an input signal, but insufficient to reconstruct the signal at the decoder if the decoder is not aware of how the feature values have been obtained. The different hybrid-INR approaches can use different mappings of the input coordinates to features, with a distinct number of layers of features, mapping methods, or resolution of the features. To properly reconstruct a signal that has been encoded using an hybrid-INR approach, the decoder needs to know how the features have been obtained in order to properly used them to reconstruct the signal. For example, the decoder needs additional information to be able to interpret the bitstream in order to reconstruct the input signal using a hybrid-INR decoder.

An aim of the embodiments provided herein is to provide a method allowing for reconstructing a signal encoded using a hybrid-INR approach while the decoder has no prior knowledge of how the features have been obtained. In this way, the decoder can reconstruct a signal encoded using any hybrid-INR approach.

Some embodiments provide for signaling/encoding information necessary for a decoder to reconstruct the input signal (image or video, or 3D data for example) when a hybrid-INR network is used for encoding the input signal. In some variants, a bitstream is described that contains both a hybrid INR (features and network parameters) and additional information necessary for signaling reconstruction, including an SEI syntax. It is also described how a decoder can use this information to reconstruct a signal.

Some embodiments describe the information that the bitstream needs to carry, whatever the INR method used. Transmitted information includes the type of features (number, shape, resolution of a grid...), interpolation method, mapping function, encoding of the features.

FIG. 4 illustrates an example of a method 400 for encoding information used by a decoder to reconstruct an input signal from an encoded hybrid-INR, according to an embodiment. The input signal can be any of an image, a video, or 3D data representing a 3D object or a scene. A bitstream is constructed that can contain data representative of the input signal encoded by a hybrid-INR approach, where the features and the INR network are optimized and encoded by off-the-shelves methods. According to the embodiments described herein, information necessary for a decoder to use the hybrid-INR network to reconstruct the input signal is encoded and transmitted in a bitstream, which can be the same or another as the bitstream comprising the feature and the INR parameters. At 410, the feature mapping and INR parameters are learned, for example as described in relation with FIG. 2 and FIG. 3 using off-the-shelves methods. At 420, feature mapping parameters are signaled, i.e. encoded, in a bitstream. Embodiments for signaling high-level syntax structure are provided below. Examples of information that the decoder should know to use a hybrid-INR network and that could be transmitted to the decoder, include the following elements:

Type of features: At a high level, this includes the kind of features that are used. The kind of features can be defined by various elements such as the number of feature layers, shape of each feature layer, their resolution etc. Typically, a feature layer is defined on a grid of a given dimension and features are defined at specific locations of the grid. Thus, the decoder needs to know the position of these specific locations and therefore the offset of the grid with respect to the coordinates used to query the grid; the number of steps in the grid and the step size of the grid lines.

Mapping between the coordinates and the features: If applicable, this describe how a coordinate is mapped to a feature value. Examples include looking-up in a table or using a hash function to obtain a coordinate in a table, where the feature value is located.

Interpolation methods: Features are typically not available for every input coordinate. If applicable, the decoder needs to know the interpolation method that must be used to compute values for coordinates without an associated vector of features.

Encoding of the features: The actual values of the features must be transmitted to the decoder, and the decoder needs to know how they are encoded.

Furthermore, the bitstream may want to describe that the approach is a hybrid INR architecture. High level syntax for inferring the INR network can also be signaled in the bitstream.

At 430, INR parameters can also be encoded in the bitstream, as well as feature values.

FIG. 5 illustrates an example of a method 500 for decoding parameters of a hybrid-INR, according to an embodiment. A bitstream that includes one or more information mentioned above is provided as input. At 510, feature mapping parameters are decoded, as well as high-level syntax for the INR part and at 520 INR parameters and features values are decoded. At 530, the signal is reconstructed using the data decoded at 510 and 520.

Some embodiments are provided below that describe examples of syntax elements for indicating the information mentioned above. Also, some embodiments are provided below for reconstructing a signal using the decoded syntax elements.

Signaling

A part of the bitstream can describe that the approach is a hybrid INR architecture.

In some embodiments, it may be possible to associate a particular type value to a specific hybrid INR architecture, for example a hybrid INR architecture that is expected to be popular. Mapping parameters of the hybrid INR are implicitly encoded by this particular type value. This embodiment allows to remove some signaling information from the bitstream, information of the hybrid INR architecture being known by the decoder, for example information being hard coded in the decoder software or specification.

For example, in this embodiment, one may want to associate a specific value (e.g., inr_model_type = 5 mentioned below) to a hybrid INR architecture where the interpolation in all layers is linear and all features are encoded in a grid.

In other embodiments, one or more of the mapping parameters of the hybrid INR can be explicitly specified in the bitstream as follows.

Input of the INR network:

An embodiment provides for describing the mapping between the input coordinates and the pixels (or voxels in case of higher dimension data) as a transformation of the input coordinates. For example, feature mapping parameters are added as high-level syntax elements along with high level syntax for INR signaling.

In other embodiments, a single type of transformation may be used and completely specified by the inr_model_type. An example is further described below with the inr_model_type=5. Other embodiments may associate one or more particular transformation type value to specific type of transforms or models, where the values of some characteristics of the feature mapping is implicitly given and known to both decoder and encoder.

Assuming a quantized network, the following syntax might be needed to describe the input and output of the network, including the transformation. According to the embodiments described herein, syntax elements for feature mapping are transmitted at a same level as other possible transformations that can be applied to the input coordinates before feeding an INR network. In other variants, the syntax elements for feature mapping can be transmitted at a level other than the transformation level. Syntax elements relating to the mapping transformation or feature mapping are shown in *italic* in the table below.

| inr_model( payloadSize ) { | Descriptor |
|---|---|
| **inr_model_type** | u(8) |
| **inr_inference_type** | u(1) |
| **inr_input_dimension_count_minus1** | u(3) |
| | |
| for(i=0;i< inr_input_dimension_count_minus1 + 1 ;i++) { | |
| **inr_input_range_minus1 [i]** | u(16) |
| **inr_input_quantizer[i]** | u(16) |
| **inr_input_zero_centered[i]** | u(1) |
| } | |
| **inr_input_transformation_count** | u(3) |
| for(i=0;i< inr_input_transformation_count;i++) { | |
| **inr_input_transformation_type [i]** | u(8) |
| if (inr_input_transformation_type [i]== 2 ) { | |
| **inr_Fourier_mapping_coefficient_count_minus1[i]** | u(8) |
| for(j=0;j< inr_Fourier_mapping_coefficient_count_minus1[i]+ 1 ;j++) { | |
| **inr_Fourier_mapping_coefficient[i][j]** | u(16) |
| } | |
| } | |
| *if (inr_input_transformation_type [i]== 3 ) {* | |
| *hybrid_inr_feature_layers_count_minus1[i]* | *u(8)* |

(continued)

| | |
|---|---|
| *for(j=0;j< hybrid_inr_feature_layers_count_minus1+1;j++) {* | |
| **hybrid_inr_feature_layers_type[i][j]** | *u(3)* |
| *if (hybrid_inr_feature_layers_type[i][j]== 1 or hybrid_inr_feature_layers_type[i][j]== 2 ) {* | |
| *for(k=0;k< current_feature_dimension_count[i];k++) {* | |
| **hybrid_inr_feature_grid_dimension_offset[i][j][k]** | *u(16)* |
| **hybrid_inr_feature_grid_dimension_step_minus1[i][j][k]** | *u(16)* |
| **hybrid_inr_feature_grid_dimension_range_minus1[i][j][k]** | *u(16)* |
| *}* | |
| **hybrid_inr_feature_size_minus1[i][j]** | *u(16)* |
| **hybrid_inr_feature_grid_interpolation_method[i][j]** | *u(3)* |
| **hybrid_inr_feature_padding_method[i][j]** | *u(3)* |
| *if hybrid_inr_feature_layers_type[i][j]== 2 {* | |
| **hybrid_inr_feature_mapping_method[ij[j]** | *u(3)* |
| *}* | |
| *}* | |
| *}* | |
| **hybrid_inr_feature_mode_idc** | *ue(v)* |
| *if( hybrid_inr_feature_mode_idc = = 1 ) {* | |
| **hybrid_inr_feature_tag_uri** | *u(8)* |
| **hybrid_inr_feature_uri** | *st(v)* |
| *}* | |
| *if(hybrid_inr_feature_mode_idc = = 0 ) {* | |
| */* ISO/IEC 15938-17 bitstream */* | |
| *while( !byte_aligned( ) )* | |
| **hybrid_inr_feature_reserved_zero_bit_b** | *u(1)* |
| *for( i = 0; more_data_in_payload( ); i++ )* | |
| **hybrid_inr_feature_payload_byte[i]** | *b(8)* |
| *}* | |
| *}* | |
| *}* | |
| **inr_output_type** | *u(3)* |
| *if (inr_output_type == 0 ) {* | |
| **inr_output_dimension_count_minus1** | *u(3)* |
| for(i=0;i< inr_output_dimension_count_minus1+1;i++) { | |
| **inr_output_range_minus1 [i]** | *u(16)* |
| **inr_output_quantizer[i]** | *u(16)* |
| **inr_output_zero_centered[i]** | *u(1)* |
| *}* | |
| *}* | |

(continued)

| | |
|---|---|
| } | |

Semantics of the syntax elements in the table above are as follows:

**inr_model_type:** tag describing the type of INR approach used to generate the output. For example, some values of **inr_model_type can** be reserved for non-hybrid INR approach, and other values can be used for hybrid-INR approach. For example, in the embodiments described herein, the following types may be defined (other numerical values can be used):

- **inr_model_type=4:** Hybrid-INR approach where the model takes as input a vector of dimension d (specified by inr_input_dimension_count_minus1) and outputs an output. Inputs is sampled uniformly in the range specified for each dimension.
- **inr_model_type=5:** Hybrid-INR approach where the model takes as input a vector of dimension d (specified by inr_input_dimension_count_minus1); where that vector is mapped to features using 7 layers of grid, where the initial grid has a resolution of 1/4 of the resolution of each dimension of the signal, where the resolution of each subsequent grid is divided by 2 with respect to the previous grid and where there is a single value at each point of the grid of each layer and values are linearly interpolated. That model outputs an output. Inputs is sampled uniformly in the range specified for each dimension.
- **inr_model_type=6:** variant of **inr_model_type=5,** where the number of layers of the grid is not specified and will be specified by the variable **hybrid_inr_feature_layers_count_minus1[i]**.
- other type can be described with other specific values for the parameters for example

**inr_inference_type:** tag describing the type of computation for the INR: integer or floating point. This may impact the syntax of some elements. As an example, a value of 0 means integer and 1 floating point computation.
**inr_input_dimension_count_minus1:** integer describing the number of dimensions minus 1 of the input. For example, for an image INR model, the input has 2 dimensions (width and height), thus *inr_input_dimension_count_minus1* is 1. For a 3D object, for example the input may have 3 dimensions or higher. For video INR model, the input has 3 dimensions. **inr_input_range_minus1[i]:** for each dimension in the input, the range of the input minus 1. The number of valid values will be inr_input_ range [i]=inr_input_range_minus1[i]+1.
**inr_input_quantizer[i]:** for each dimension in the input, integer representing the quantizer of the fixed point integer. For example, if inr input_quantizer[i]=0, the input x on dimension d represents the value x. If inr_input_quantizer[i]=3, the input x on dimension d represents the value $(x/2^3)$.
**inr_input_zero_centered[i]:** if the flag is 0 (false), the input on dimension d is in the range [0, inr_input_range[i]], if the flag is 1 (true), the value are in the range [inr_input_range[i]/2-inr_input_range[i], inr_input_range[i]/2]. Alternatively, the flag inr_input_zero_centered can be replaced by an explicit encoding of the offset of the zero value.
**inr_output_type:** described the type of output of the INR network. The type 0 is let to define custom type. Other types can for example be predefined as:

inr_output_type=1: RGB output with each component encoded on 8 bits in the range [0,255],
inr_output_type=2: RGB output with each component encoded on 10 bits in the range [0,1023],
inr_output_type=3: YUV output with each component encoded on 8 bits in the range [0,255],
inr_output_type=4: YUV output with each component encoded on 10 bits in the range [0,1023],
inr_output_type=5: RGBA output with each component encoded on 8 bits in the range [0,255],
where A represents an alpha value,
etc.
when the type is 0, the output characteristics is described using the same logic as for the input (number of components, range, quantizer, offset of the zero value).

**inr_input_transformation_count:** integer describing the number of successive transformations applied to the input prior to being fed to the INR network. For example, if one transformation is applied, the value is 1. If three transformations are applied, the value is 3.
**inr_input_transformation_type[i]:** tag describing the type of transformations applied to the input. The type 0 is let to define custom type. For example, the following types may be defined:

- **inr_input_transformation_type[i]=1:** hyperspherical coordinates transform
- **inr_input_transformation_type[i]=2:** Fourier mapping using a custom Fourier mapping matrix. This type value necessitates that **inr_inference_type** is float. In that case, the custom matrix is described as follows:

o **inr_Fourier_mapping_coefficient_count_minus1[i]:** integer describing the number of Fourier mapping coefficient transformations minus 1
o **inr_Fourier_mapping_coefficient[i][j]:** Value of a Fourier mapping coefficient

- **inr_input_transformation_type[i]=3:** The transformation is a mapping to a group of features, several mapping transformations can be defined, thus forming a group of mapping transformations. Each mapping transformation is done in parallel of the others and maps the input coordinates to a group of features.
- **Etc**

According to the variant described herein, a group of mapping transformations can thus be defined by setting the syntax element of the ith transformation **inr_input_transformation_type[i]** to the value 3. A mapping transformation here can be seen as a feature layer. A group of feature layers or a group of mapping transformations can be applied to the input signal to derive a vector of features that concatenates the output of each mapping transformation. In this embodiment, the feature layers or the mapping transformations of the group are applied in parallel of each other. Each mapping transformation provides a group of features for a given input coordinate and each group of features is then concatenated to be provided as input to the INR network along with the input coordinate.

Each group of mapping transformations can be described by the following elements: **hybrid_inr_feature_-layers_count_minus1[i]:** integer describing the number of feature layers, or of mapping transformations in the group.

For example, if one mapping transformation is used, the value is 0. If three mapping transformations are used, the value is 2.

For each feature layer or mapping transformation, the following syntax elements can be described to signal the group of features provided by the current mapping transformation j : **hybrid_inr_feature_layers_type[i][j]:** tag describing the type of group of features the input coordinates are mapped to. The type 0 is let to define custom type. For example, the following types may be defined:

o **hybrid_inr_feature_layers_type[i][j]==** 1: defines a grid of features with a same number of dimensions as the input coordinates. This dimension is denoted by **current_feature_dimension_count[i].** If this transformation is the first transformation of the input signal (i=0), then this value is equal to inr_input_dimension_count_minus1+1. Otherwise, the number of dimensions may have been modified by previous transformations (transformation of index between 0 and i-1). The features are positioned on a grid in the same space as the current coordinates. Feature values between these valid grid positions are obtained by interpolation or other upsampling methods. These are the input coordinates plus the transformations defined so far, if applicable. This transform is further described as follows:

▪ For each input dimension in the input signal:

• **hybrid_inr_feature_grid_dimension_offset[i][j][k]:** the offset between the reference input coordinate and the first valid position of the grid, in that dimension. The reference input coordinate may be the first valid inr input coordinate, the middle point etc. If other transformations are defined before the feature mapping, this first valid inr input coordinate is modified by these transformations to produce the reference input coordinate for the feature mapping.
• **hybrid_inrfeature_grid_dimension_step_minus1[i][j][k]:** The difference between two valid grid coordinates in that dimension, minus 1.
• **hybrid_inrfeature_grid_dimension_range_minus1[i][j][k]:** for each dimension in the input, the range of the grid minus 1. The number of valid grid positions in that dimension will be hybrid_inr_feature_grid_dimension_range [i][j][k]= hybrid_inr_feature_grid_dimension_range_minus1[i][j][k]+1

▪ **hybrid_inr_feature_size_minus1[i][j]:** the number of values associated to each position of the grid, minus 1. For example, if a vector of 2 values is associated to each position of the grid, **hybrid_inr_feature_size_minus1 = 1.**

▪ **hybrid_inr_feature_grid_interpolation_method [i][j]:** Tag describing the method used for feature interpolation. The type 0 is let to define custom type. For example, the following types may be defined:

• **hybrid_inr_feature_grid_interpolation_method [i][j] == 1: linear interpolation**
• **hybrid_inr_feature_grid_interpolation_method [i][j] == 2: bicubic interpolation**
• **hybrid_inr_feature_grid_interpolation_method [i][j] == 3: interpolation using a neural network.** In that case, the neural network parameters of this interpolation network are signalled.

- **Etc**

  ▪ **hybrid_inr_feature_padding_method[i][j]:** Tag describing the method used to pad the grid. The purpose of this tag is to handle cases when points must be queried outside the grid coordinates. This may for example happen when the INR model is used to extend the original image or when using an interpolation method that require point outside the signal domain. The type 0 is let to define custom type. For example, the following types may be defined:

    - **hybrid_inr_feature_padding_method[i][j] == 1: 0-padding**
    - **hybrid_inr_feature_padding_method[i][j] == 2: replication**
    - **hybrid_inr_feature_padding_method[i][j] == 3: reflection padding**
    - **Etc**

  o **hybrid_inr_feature_layers_type[i]** == 2: The features are mapped using a hash table. For this type of feature layer, the syntax is similar to the grid feature layer described above, but with the addition of an element describing the function mapping a grid point and a value in a table. For example, this element could be named **hybrid_inr_feature_mapping_method.** The type 0 is let to define custom type. Other types can for example be predefined as:

    ▪ **hybrid_inr_feature_mapping_method[i][j] == 1:** spatial hash function with known parameters
    ▪ **hybrid_inr_feature_mapping_method[i][j] == 2:** Fibonacci hashing with known parameters
    ▪ **hybrid_inr_feature_mapping_method[i][j] == 3:** spatial hash function with signalled parameters. In that case, the parameters of this function are signalled.
    ▪ **etc**

In other embodiments, some elements may be described at another level. For example,

**hybrid_inr_feature_grid_dimension_offset,**
**hybrid_inr_feature_grid_dimension_step_minus1** and/or
**hybrid_inr_feature_grid_interpolation_method, hybrid_inr_feature_mapping_method or hybrid_inr_feature_padding_method** could be described for all feature layers in a transformation and thus only listed once when **inr_input_transformation_type[i]=3,** or for a subset of the feature layers, or for features of any type. This could be done by default, or another specific feature type could be described with this syntax.

Alternatively, the values of all or of some of the syntax elements may be fixed for some values of **hybrid_inr_feature_layers_type.** This could be done in a similar way as the example of inr_model_type=5 or 6 described above.
As an example, a value of **hybrid_inr_feature_layers_type** can define a mapping transformation such that the features are described as a hash table where the mapping function (and potentially the associated coefficients are known). Some values of the syntax elements of the mapping transformation may also be defined with respect to a previous **hybrid_inr_feature_layers_type.** For example, a value of **hybrid_inr_feature_layers_type** could provide for defining a mapping transformation such the syntax elements of the mapping transformation are the same as a previous mapping transformation except that the step double every layer, or such that the step value is multiplied by a specified scaling factor, for example in a variable in the HLS (High-Level Syntax) named **hybrid_inr_feature_grid_scaling_factor** specified for this value **of hybrid_inr_feature_layers_type.** In this variant, other syntax elements are not signalled for the mapping transformation having the specific value of **hybrid_inr_feature_layers_type.**
In other embodiments, some values of **inr_input_transformation_type** may be defined such that some values characterizing a mapping transformation of the group are automatically defined with respect to a previous mapping transformation of a given **hybrid_inr_feature_layers_type.** For example, one **inr_input_transformation_type** could be defined such that the step double with layer, or such that the step value is multiplied by a specified scaling factor, for example in a variable in the HLS named **hybrid_inr_feature_grid_scaling_factor.** In that case, only the values characterizing the grid dimensions of one **hybrid_inr_feature_layers** may be listed.
In other embodiments, different variants of **inr_input_transformation_type** for hybrid INR, such as the ones described in the previous paragraphs, may be described by a type variable that is defined for hybrid INR, i.e. **inr_input_transformation_type[i]=3** in the syntax described above. Such a type variable may for example be called **hybrid_inr_transformation_type.** For example, for each mapping transformation j, the type variable can be set to a given value which implicitly signals one or more of the above discussed parameters of the mapping transformation j.
In other embodiments, some elements may be described together by another variable. For example, a variable name e.g. **inr_input_transformation_subtype** could jointly specify

**hybrid_inr_feature_grid_dimension_offset,**
**hybrid_inr_feature_grid_dimension_step_minus1** and/or
**hybrid inr feature_grid_interpolation_method** and/or other variables.

In this embodiment, a specific value for the subtype **inr_input_transformation_subtype** corresponds to given values of offset, step and interpolation method and these syntax elements are not explicitly signalled.

In another embodiment, the type of feature (**hybrid_inr_feature_layers_type**) may be described directly as an **inr_input_transformation_type.** In that case, the value **hybrid_inr_feature_layers_type** may not exist, and the different variants would instead be variants of **inr_input_transformation_type.**

In other embodiments, the "grid" and "hash" types of features could be described by the same **hybrid_inr_feature_layers_type,** and identifying how a grid point is mapped to a specific values, for example by specifying a mapping function (hash, identity...). The identity mapping function would correspond to the "grid" type of feature map described above.

In other embodiments, only some variables described above may be used.

In another embodiment, some information listed above may be omitted if they are encoded in the values of the features. For example, the bitstream encoding feature values may come with the size of the tensor. In that case, **hybrid_inr_feature_size_minus1[i][j]** and **hybrid_inr_feature_grid_dimension_range_minus1[i][j][k]** may be redundant and may not be included in the HLS described above.

The values of the features must also be encoded, for example using the following syntax:

**hybrid_inr_feature_mode_idc** indicates the format used to encode the feature values. A value equals to 0 indicates that the payload contains an ISO/IEC 15938-17 bitstream. A value of 1 indicates that this payload contains features encoded by a format identified by the tag URI **hybrid_inr_feature_tag_uri.**

**hybrid_inr_feature_tag_uri** contains a tag URI with syntax and semantics as specified in IETF RFC 4151 identifying the format and associated information about the INR hybrid features.

**hybrid_inr_feature_uri** contains a URI with syntax and semantics as specified in IETF Internet Standard 66 identifying the INR hybrid features.

**hybrid_inr_feature_payload_byte[i]** contains the i-th byte of a bitstream conforming to ISO/IEC 15938-17. The byte sequence inr_payload_byte[i] for all present values of i shall be a complete bitstream that conforms to ISO/IEC 15938-17.

In other embodiments, the names of the variables may change, for example by using "mapped" or "grid" instead of "hybrid" in the names.

In this embodiment, a syntax has been described where the values of all the hybrid feature layers are encoded and sent in the same bitstream. In an alternative embodiment, there may be one bitstream for each layer, or each group of layers.

In alternative embodiments, the values of some relevant coefficients or parameters may be included in the bitstream, for example one or more coefficients of the interpolation function or coefficients of the hash function, if applicable.

Below, some examples of values for the syntax elements described above are provided.

For example, for a hybrid-INR model aiming at encoding an image of size WxH with no upsampling where, in the first transformation, input coordinates are mapped to 3 grids of features, each grid of features using replication padding and:

a first grid of features uses an identity mapping, no offset (i.e. aligned with the coordinate grid),
one grid point provides three values every 8 input coordinates and linear interpolation is used,
a second grid of features uses a hash mapping based on spatial hashing of the grid coordinates, with offset of 2-pixel coordinates in the first dimension and 0 in the other dimension, one grid point provides one value every 4 input coordinates and bicubic interpolation is used,
a third grid of features uses a hash mapping based on spatial hashing of the grid coordinates, with offset of 1-pixel coordinate in the first dimension and 0 in the other dimension, one grid point provides one value every 2 input coordinates and bicubic interpolation is used,
the values of the syntax elements could be described by the following parameters, / denotes floor division, % the modulo operator and // real division.

- **inr_model_type=4**
- **inr_input_transformation_type[0]** = 3

- **hybrid_inr_feature_layers_count_minus1**[0] **= 2**
- **hybrid_inr_feature_layers_type[0][0] = 1**
- **hybrid_inr_feature_grid_dimension_offset[0][0][0] = 0**
- **hybrid_inr_feature_grid_dimension_step_minus1[0][0][0] = 7**
- **hybrid_inr_feature_grid_dimension_range_minus1[0][0][0] = W / 8 - 1**
- **hybrid_inr_feature_grid_dimension_offset[0][0][1] = 0**
- **hybrid_inr_feature_grid_dimension_step_minus1[0][0][1] = 7**
- **hybrid_inr_feature_grid_dimension_range_minus[0][0][1] = H / 8 - 1**
- **hybrid_inr_feature_size_minus1[0][0] = 2**
- **hybrid_inr_feature_grid_interpolation_method[0][0] = 1**
- **hybrid_inr_feature_padding_method[0][0] = 2**
- **hybrid_inr_feature_layers_type[0][1] = 2**
- **hybrid_inr_feature_grid_dimension_offset[0][1][0] = 2**
- **hybrid_inr_feature_grid_dimension_step_minus1[0][1][0] = 3**
- **hybrid_inr_feature_grid_dimension_range_minus[0][1][0] = (W-2) / 4 - 1**
- **hybrid_inr_feature_grid_dimension_offset[0][1][1] = 0**
- **hybrid_inr_feature_grid_dimension_step_minus1[0][1][1] = 3**
- **hybrid_inr_feature_grid_dimension_range_minus [0][1][1] = H / 4 - 1**
- **hybrid_inr_feature_size_minus1[0][1] = 0**
- **hybrid_inr_feature_grid_interpolation_method[0][1] = 2**
- **hybrid_inr_feature_padding_method[0][1] = 2**
- **hybrid_inr_feature_mapping_method[0][1]=1**
- **hybrid_inr_feature_layers_type[0][2] = 2**
- **hybrid_inr_feature_grid_dimension_offset[0][2][0] = 1**
- **hybrid_inr_feature_grid_dimension_step_minus1[0][2][0] = 1**
- **hybrid_inr_feature_grid_dimension_range_minus1[0][2][0] = (W-1) / 2 -1**
- **hybrid_inr_feature_grid_dimension_offset[0][2][1] = 0**
- **hybrid_inr_feature_grid_dimension_step_minus1[0][2][1] = 1**
- **hybrid_inr_feature_grid_dimension_range_minus[0][2][1] = H / 2 - 1**
- **hybrid_inr_feature_size_minus1[0][2] = 0**
- **hybrid_inr_feature_grid_interpolation_method[0][2] = 2**
- **hybrid_inr_feature_padding_method[0][2] = 2**
- **hybrid_inr_feature_mapping_method[0][2]=1**

Mapping an input coordinate (x,y) to the features, to recover the image in its original size, would then be as follows:

where g[j](.) denotes the function corresponding to feature dimension j mapping an integer coordinate to a value. The function hash(.,.) hashes the first argument using a hash function specified by the second argument of type **hybrid_inr_feature_mapping_method:**

```
feature(x,y)=[]
for(j=0;j<= hybrid_inr_feature_layers_count_minus1+1;j++) {
      x1= (x- hybrid_inr_feature_grid_dimension_offset[0][j][0]) /
      (hybrid_inr_feature_grid_dimension_step_minusl[0][j][0]+1)
      x2= x1+1
      delta x = (x-
      hybrid_inr_feature_grid_dimension_offset[0][j][0]) %
      (hybrid_inr_feature_grid_dimension_step_minusl[0][j][0]+1)//
      (hybrid_inr_feature_grid_dimension_step_minusl[0][j][0]+1)
      y1= (y- hybrid_inr_feature_grid_dimension_offset[0][j][1]) /
      (hybrid_inr_feature_grid_dimension_step_minus1[0][j][1]+1)
      y2= y1+1
      delta_y = (y-
      hybrid_inr_feature_grid_dimension_offset[0][j][1]) %
      (hybrid_inr_feature_grid_dimension_step_minusl[0][j][1]+1)//
      (hybrid_inr_feature_grid_dimension_step_minus1[0][j][1]+1)
      x1=min(max(0,x1), hybrid_inr_feature_grid_dimension_range
      [0][j][0])
      x2= min(max(0,x2), hybrid_inr_feature_grid_dimension_range
      [0][j][0])
      y1=min(max(0,y1), hybrid_inr_feature_grid_dimension_range
      [0][j][1])
      y2= min(max(0,y2), hybrid_inr_feature_grid_dimension_range
```

```
[0][j][1])
if (hybrid_inr_feature_layers_type[i][j]== 2){
        x1=hash(x1, hybrid_inr_feature_mapping_method[0][j]==2)
        x2=hash(x2, hybrid_inr_feature_mapping_method[0] [j]==2)
        y1=hash(y1, hybrid_inr_feature_mapping_method[0][j]==2)
        y2=hash(y2, hybrid_inr_feature_mapping_method[0][j]==2) }
if (hybrid_inr_feature_grid_interpolation_method[0][j] == 1){
        new_values = linear_interpolation(g[j][x1],g[j][x2],g[j]
        [y1],g[j][y2],delta_x, delta_y)
}
if (hybrid_inr_feature_grid_interpolation_method[0][j] == 2){
        new_values = bicubic_interpolation(g[j][x1], g[j][x2],g[j]
        [y1],g[j][y2],delta_x, delta_y) }
append(feature(x,y),new_values)
```

Note that in case integer arithmetic is used, division operators may be replaced by a combination of shift and multiplication operators. As another example, for a hybrid INR model aiming at encoding an image of size WxH with no upsampling where, in the first transformation, the coordinates are mapped to features using 7 layers of grid, where the initial grid has a resolution of 1/4 of the resolution of each dimension of the signal, where the resolution of each subsequent grid is divided by 2 with respect to the previous grid and where there is a single value at each point of the grid of each layer and values are linearly interpolated, the values of the syntax elements could be described by the following parameter

- **inr_model_type=5.**

Decoding procedure

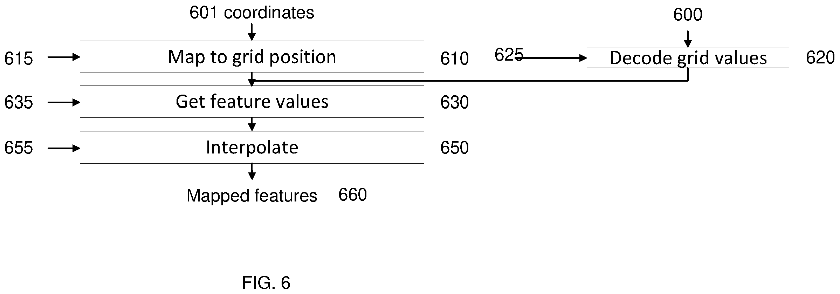

FIG. 6 provides a high-level overview of an example process a decoder may rely on to use the HLS described above and the associated bitstream to perform a feature mapping. The input bitstream or parts of this bitstream is/are fed to the modules of the process. The first module 620 decodes the feature values. This module takes as input a bitstream 600 containing the feature values and/or URI identifying these features and obtain their values. It also takes as input information 625 necessary to decode the feature values. Such information 625 may also contain HLS information about the number of layers in the feature mapping, the position of the grid values with respect to the input and/or the shape of each grid.

Then, for every set of input coordinates 601 that must be mapped to feature values, at 610, the decoder maps these input coordinates 601 to relevant grid positions. For example, in the case of an image signal to reconstruct, these input coordinates are typically pairs (x,y) positions where x and y respectively range from one to the width and height of the image. Alternatives are possible depending on the type of INR used, for example using input coordinates associated to blocks of pixels. For 3D object, the input coordinates can be a triplet (x,y,z) positions providing the 3D location of a point in a 3D space.

To perform the mapping, the decoder uses HLS information 615 that define the position of these grid points and their relationship to the input coordinates, such as the offset, the number of steps and the size of the grid. Typically, it may also use information about the mapping function and the number of feature maps. The information 615 comprises one or more of the syntax elements discussed according to any one of the embodiments described above.

At 630, the decoder may obtain the feature values based on the coordinates 601. In other words, for a given pair of input coordinates (x,y), in the case of the image, the feature values encoded for this pair of input coordinates are obtained.

If the feature layer is a grid, then the feature values for the input coordinates 601 are accessed/queried from the grid. If the feature layer is based on a hash function, the input coordinates 601 may first be hashed using additional HLS (635) information such as the hashing function to use.

The padding method may also be useful if the input coordinates 601 are outside the area covered by the grid of the layer (either for identity mapping or has function).

At 650, the decoder may interpolate the feature values obtained if necessary (for example if the mapped input coordinates 601 are in-between grid positions), based on interpolation HLS information (655).

The obtained feature values, eventually interpolated, are then concatenated to form the mapped features 660 that are provided to an input of the INR network to reconstruct the values of the signal for the input coordinates 601 as illustrated with FIG. 3.

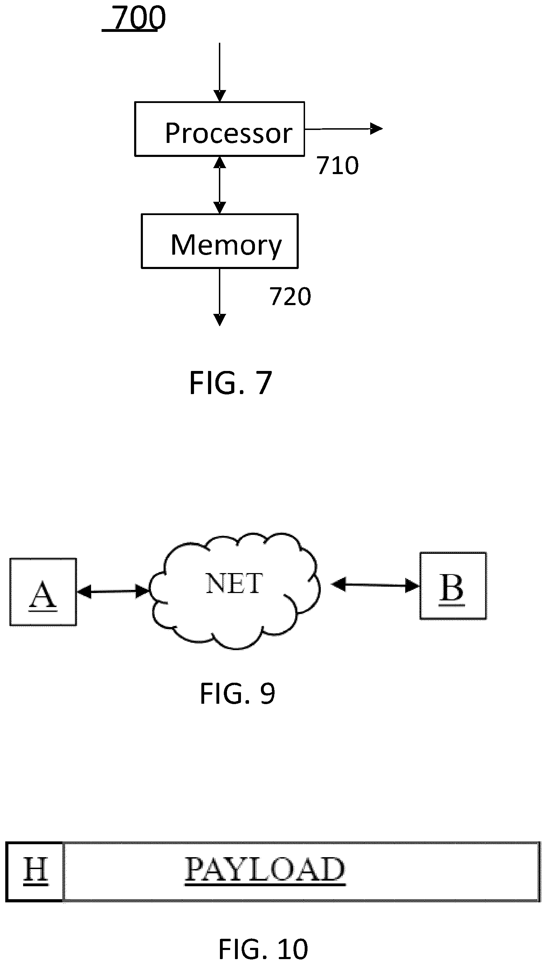

FIG. 7 illustrates a block diagram of a system within which aspects of the present embodiments may be implemented, according to an embodiment. FIG. 7 shows one embodiment of an apparatus 700 for encoding or decoding metadata used by a hybrid-INR decoder according to any one of the embodiments described herein. The apparatus comprises Processor 710 and can be interconnected to a memory 720 through at least one port. Both Processor 710 and memory 720 can also have one or more additional interconnections to external connections.

Processor 710 is also configured to obtain one or more syntax elements providing for reconstructing at least one part of an image or a 3D object using at least one hybrid Implicit Neural Representation network, the at least one hybrid Implicit Neural Representation network comprising at least one mapping transformation that maps input coordinates of the image or 3D object to a group of features and an INR network that takes as input the group of features and outputs values of the image or 3D object at the input coordinates, wherein the one or more syntax elements indicate parameters relating to the at least one mapping transformation, and signal the one or more syntax elements in a bitstream, using any one of the embodiments described herein.

In another variant, the processor 710 is configured to decode one or more syntax elements providing for reconstructing at least one part of an image or a 3D object using at least one hybrid Implicit Neural Representation network, the at least one hybrid Implicit Neural Representation network comprising at least one mapping transformation that maps input coordinates of the image or 3D object to a group of features and an INR network that takes as input the group of features and outputs values of the image or 3D object at the input coordinates, wherein the one or more syntax elements indicate parameters relating to the at least one mapping transformation, and reconstruct the at least one part of the image or 3D object using the decoded one or more syntax elements, using any one of the embodiments described herein.

For instance, the processor 710 is configured using a computer program product comprising code instructions that implements any one of embodiments described herein.

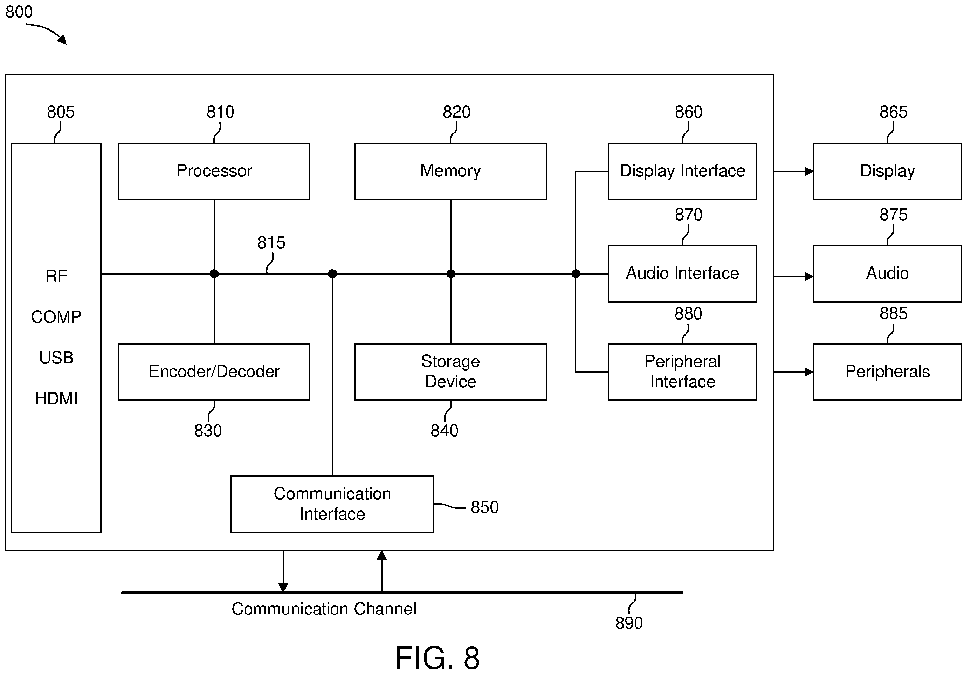

FIG. 8 illustrates a block diagram of an example of a system in which various aspects and embodiments can be implemented. System 800 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 800, singly or in combination, may be embodied in a single integrated circuit, multiple ICs, and/or discrete components. For example, in at least one embodiment, the processing and encoder/decoder elements of system 800 are distributed across multiple ICs and/or discrete components. In various embodiments, the system 800 is communicatively coupled to other systems, or to other electronic devices, via, for example, a communications bus or through dedicated input and/or output ports. In various embodiments, the system 800 is configured to implement one or more of the aspects described in this application.

The system 800 includes at least one processor 810 configured to execute instructions loaded therein for implementing, for example, the various aspects described in this application. Processor 810 may include embedded memory, input output interface, and various other circuitries as known in the art. The system 800 includes at least one memory 820 (e.g., a volatile memory device, and/or a non-volatile memory device). System 800 includes a storage device 840, which may include non-volatile memory and/or volatile memory, including, but not limited to, EEPROM, ROM, PROM, RAM, DRAM, SRAM, flash, magnetic disk drive, and/or optical disk drive. The storage device 840 may include an internal storage device, an attached storage device, and/or a network accessible storage device, as non-limiting examples. System 800 includes an encoder/decoder module 830 configured, for example, to process data to provide parameters of a hybrid-INR that are representative of at least one part of an image, a video or 3D object and/or encoded parameters of an hybrid-INR that are representative of at least one part of an image, a video or 3D object or a decoded parameters of an hybrid-INR that are representative of at least one part of an image, a video or 3D object and/or at least one part of the signal reconstructed from the decoded hybrid-INR, and the encoder/decoder module 830 may include its own processor and memory. The encoder/decoder module 830 represents module(s) that may be included in a device to perform the encoding and/or decoding functions. As is known, a device may include one or both of the encoding and decoding modules. Additionally, encoder/decoder module 830 may be implemented as a separate element of system 800 or may be incorporated within processor 810 as a combination of hardware and software as known to those skilled in the art.

Program code to be loaded onto processor 810 or encoder/decoder 830 to perform the various aspects described in this application may be stored in storage device 840 and subsequently loaded onto memory 820 for execution by processor 810. In accordance with various embodiments, one or more of processor 810, memory 820, storage device 840, and encoder/decoder module 830 may store one or more of various items during the performance of the processes described in this application. Such stored items may include, but are not limited to, the input image, video, 3D data, weights of the hybrid-INR, the decoded image, decoded video, decoded 3D data or portions of the decoded data, the bitstream, matrices, variables, and intermediate or final results from the processing of equations, formulas, operations, and operational logic.

In some embodiments, memory inside of the processor 810 and/or the encoder/decoder module 830 is used to store instructions and to provide working memory for processing that is needed during encoding or decoding. In other embodiments, however, a memory external to the processing device (for example, the processing device may be either the processor 810 or the encoder/decoder module 830) is used for one or more of these functions. The external memory may be the memory 820 and/or the storage device 840, for example, a dynamic volatile memory and/or a non-volatile flash memory. In several embodiments, an external non-volatile flash memory is used to store the operating system of a television.

The input to the elements of system 800 may be provided through various input devices as indicated in block 805.

Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 8, include composite video.

In various embodiments, the input devices of block 805 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 800 to other electronic devices across USB and/or HDMI connections. It is to be understood that various aspects of input processing, for example, Reed-Solomon error correction, may be implemented, for example, within a separate input processing IC or within processor 810 as necessary. Similarly, aspects of USB or HDMI interface processing may be implemented within separate interface ICs or within processor 810 as necessary. The demodulated, error corrected, and demultiplexed stream is provided to various processing elements, including, for example, processor 810, and encoder/decoder 830 operating in combination with the memory and storage elements to process the data stream as necessary for presentation on an output device.

Various elements of system 800 may be provided within an integrated housing, Within the integrated housing, the various elements may be interconnected and transmit data therebetween using suitable connection arrangement 815, for example, an internal bus as known in the art, including the I2C bus, wiring, and printed circuit boards.

The system 800 includes communication interface 850 that enables communication with other devices via communication channel 890. The communication interface 850 may include, but is not limited to, a transceiver configured to transmit and to receive data over communication channel 890. The communication interface 850 may include, but is not limited to, a modem or network card and the communication channel 890 may be implemented, for example, within a wired and/or a wireless medium.

Data is streamed to the system 800, in various embodiments, using a Wi-Fi network such as IEEE 802.11 (IEEE refers to the Institute of Electrical and Electronics Engineers). The Wi-Fi signal of these embodiments is received over the communications channel 890 and the communications interface 850 which are adapted for Wi-Fi communications. The communications channel 890 of these embodiments is typically connected to an access point or router that provides access to outside networks including the Internet for allowing streaming applications and other over-the-top communications. Other embodiments provide streamed data to the system 800 using a set-top box that delivers the data over the HDMI connection of the input block 805. Still other embodiments provide streamed data to the system 800 using the RF connection of the input block 805. As indicated above, various embodiments provide data in a non-streaming manner. Additionally, various embodiments use wireless networks other than Wi-Fi, for example a cellular network or a Bluetooth network.

The system 800 may provide an output signal to various output devices, including a display 865, speakers 875, and other peripheral devices 885. The display 865 of various embodiments includes one or more of, for example, a touchscreen display, an organic light-emitting diode (OLED) display, a curved display, and/or a foldable display. The display 865 can be for a television, a tablet, a laptop, a cell phone (mobile phone), or other device. The display 865 can also be integrated with other components (for example, as in a smart phone), or separate (for example, an external monitor for a laptop). The other peripheral devices 885 include, in various examples of embodiments, one or more of a stand-alone digital video disc (or digital versatile disc) (DVR, for both terms), a disk player, a stereo system, and/or a lighting system. Various embodiments use one or more peripheral devices 885 that provide a function based on the output of the system 800. For example, a disk player performs the function of playing the output of the system 800.

In various embodiments, control signals are communicated between the system 800 and the display 865, speakers 875, or other peripheral devices 885 using signaling such as AV.Link, CEC, or other communications protocols that enable device-to-device control with or without user intervention. The output devices may be communicatively coupled to system 800 via dedicated connections through respective interfaces 860, 870, and 880. Alternatively, the output devices may be connected to system 800 using the communications channel 890 via the communications interface 850. The display 865 and speakers 875 may be integrated in a single unit with the other components of system 800 in an electronic device, for example, a television. In various embodiments, the display interface 860 includes a display driver, for example, a timing controller (T Con) chip.

The display 865 and speaker 875 may alternatively be separate from one or more of the other components, for example, if the RF portion of input 805 is part of a separate set-top box. In various embodiments in which the display 865 and speakers 875 are external components, the output signal may be provided via dedicated output connections, including, for example, HDMI ports, USB ports, or COMP outputs.

The embodiments can be carried out by computer software implemented by the processor 810 or by hardware, or by a combination of hardware and software. As a non-limiting example, the embodiments can be implemented by one or more integrated circuits. The memory 820 can be of any type appropriate to the technical environment and can be implemented using any appropriate data storage technology, such as optical memory devices, magnetic memory devices, semiconductor-based memory devices, fixed memory, and removable memory, as non-limiting examples. The processor 810 can be of any type appropriate to the technical environment, and can encompass one or more of microprocessors, general purpose computers, special purpose computers, and processors based on a multi-core architecture, as non-limiting examples.

In an embodiment, illustrated in FIG. 9, in a transmission context between two remote devices A and B over a communication network NET, the device A comprises a processor in relation with memory RAM and ROM which are configured to implement a method for encoding one or more syntax elements for reconstructing a signal using a hybrid-INR decoder, as described with FIG. 1-6 and the device B comprises a processor in relation with memory RAM and ROM which are configured to implement a method for decoding one or more syntax elements for reconstructing a signal using a hybrid-INR decoder as described in relation with FIG 1-6. In accordance with an example, the network is a broadcast network, adapted to broadcast/transmit a coded INR and one or more syntax elements described herein from device A to decoding devices including the device B. In some embodiments, the coded INR and the one or more syntax elements are transmitted in a same signal. In other embodiments, the coded INR and the one or more syntax elements are transmitted separately in distinct signals.

FIG. 10 shows an example of the syntax of a signal transmitted over a packet-based transmission protocol. Each transmitted packet P comprises a header H and a payload PAYLOAD. In some embodiments, the payload PAYLOAD may comprise one or more syntax elements for reconstructing a signal using a hybrid-INR decoder, according to any one of the embodiments described above.

In some embodiments, the one or more syntax elements comprise at least one of a number of successive groups of features, an indication of a type of a group of features to which the input coordinates are mapped, for each dimension of an input to a mapping to a group of features, an offset between a reference input coordinate and a first valid position of a grid of the group of features along the dimension, a step between two valid grid coordinates along the dimension, a range of the grid along the dimension, a number of values associated to each position of a grid of a group of features, an indication of a method used for feature interpolation, an indication of a method used for padding a grid of a group of features, for a group of features mapped using a hash table, an indication of a method used for the mapping.

Various implementations involve decoding. "Decoding", as used in this application, can encompass all or part of the processes performed, for example, on a received encoded INR in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image, video or 3D data.

Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in image, video or neural network standards such as putting the information into an SPS, a PPS, a NAL unit, a header (for example, a NAL unit header, or a slice header), or an SEI message. Other manners are also available, including for example manners common for system level or application level standards such as putting the information into one or more of the following:

a. SDP (session description protocol), a format for describing multimedia communication sessions for the purposes of session announcement and session invitation, for example as described in RFCs and used in conjunction with RTP (Real-time Transport Protocol) transmission.

b. DASH MPD (Media Presentation Description) Descriptors, for example as used in DASH and transmitted over HTTP, a Descriptor is associated to a Representation or collection of Representations to provide additional characteristic to the content Representation.

c. RTP header extensions, for example as used during RTP streaming.

d. ISO Base Media File Format, for example as used in OMAF and using boxes which are object-oriented building blocks defined by a unique type identifier and length also known as 'atoms' in some specifications.

e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described above. Features of these embodiments can be provided alone or in any combination, across various claim categories and types.

**Claims**

1.  A method, comprising:

    obtaining one or more syntax elements providing for reconstructing at least one part of an image or a 3D object using at least one hybrid Implicit Neural Representation network, the at least one hybrid Implicit Neural Representation network comprising at least one mapping transformation that maps input coordinates of the image or 3D object to a group of features and an INR network that takes as input the group of features and outputs values of the image or 3D object at the input coordinates,
    wherein the one or more syntax elements indicate parameters relating to the at least one mapping transformation, signaling the one or more syntax elements in a bitstream.

2.  An apparatus, comprising one or more processors, wherein said one or more processors is operable to:

    obtain one or more syntax elements providing for reconstructing at least one part of an image or a 3D object using at least one hybrid Implicit Neural Representation network, the at least one hybrid Implicit Neural Representation network comprising at least one mapping transformation that maps input coordinates of the image or 3D object to a group of features and an INR network that takes as input the group of features and outputs values of the image or 3D object at the input coordinates,
    wherein the one or more syntax elements indicate parameters relating to the at least one mapping transformation, signal the one or more syntax elements in a bitstream.

3.  A method, comprising:

    decoding one or more syntax elements providing for reconstructing at least one part of an image or a 3D object using at least one hybrid Implicit Neural Representation network,
    the at least one hybrid Implicit Neural Representation network comprising at least one mapping transformation that maps input coordinates of the image or 3D object to a group of features and an INR network that takes as input the group of features and outputs values of the image or 3D object at the input coordinates,
    wherein the one or more syntax elements indicate parameters relating to the at least one mapping transformation, and
    reconstructing the at least one part of the image or 3D object using the decoded one or more syntax elements.

4.  An apparatus, comprising one or more processors, wherein said one or more processors is operable to:

    decode one or more syntax elements providing for reconstructing at least one part of an image or a 3D object using at least one hybrid Implicit Neural Representation network,
    the at least one hybrid Implicit Neural Representation network comprising at least one mapping transformation that maps input coordinates of the image or 3D object to a group of features and an INR network that takes as input the group of features and outputs values of the image or 3D object at the input coordinates,
    wherein the one or more syntax elements indicate parameters relating to the at least one mapping transformation, and
    reconstruct the at least one part of the image or 3D object using the decoded one or more syntax elements.

5.  A bitstream comprising data representative of one or more syntax elements providing for reconstructing at least one part of an image or a 3D object using at least one hybrid Implicit Neural Representation (INR) network, the at least one hybrid INR network comprising at least one mapping transformation that maps input coordinates of the image or 3D object to a group of features and an INR network that takes as input the group of features and outputs values of the image or 3D object at the input coordinates, wherein the one or more syntax elements indicate parameters relating to the at least one mapping transformation.

6. The method of claim 1 or 3 or the apparatus of claim 2 or 4 or the bitstream of claim 5, wherein the bitstream further comprises one or more syntax elements relating to the INR.

7. The method of claim 1, 3 or 6 or the apparatus of claim 2, 4 or 6, or the bitstream of claim 5 or 6, wherein the one or more syntax elements comprising parameters relating to the at least one mapping transformation includes at least one of:

- A number of mapping transformations to apply to the input coordinates,
- An indication of a type of a group of features to which the input coordinates are mapped,
- For each dimension of an input to a mapping to a group of features, an offset between a reference input coordinate and a first valid position of a grid of the group of features along the dimension, a step between two valid grid coordinates along the dimension, a range of the grid along the dimension,
- A number of values associated to each position of a grid of a group of features,
- An indication of a method used for feature interpolation,
- An indication of a method used for padding a grid of a group of features,
- For a group of features mapped using a hash table, an indication of a method used for the mapping.

8. The method or the apparatus of claim 7 wherein the bitstream further comprises or the bitstream of claim 7, further comprising one or more syntax elements for signaling values of the features and data representative of the values of the features.

9. The method of claim 1 or 3, or the apparatus of claim 2 or 4, or the bitstream of claim 5, wherein the one or more syntax elements indicating the parameters relating to the at least one mapping transformation includes a given value of a type of INR and wherein the parameters are implicitly signaled by the given value.

10. The method of claim 3, or the apparatus of claim 4, wherein reconstructing the part of the image or 3D object comprises:

obtaining the parameters relating to the at least one mapping transformation from the one or more syntax parameters,
mapping input coordinates to grid positions using the obtained parameters,
obtaining feature values for the input coordinates based on grid positions,
concatenating the obtained feature values,
providing the concatenating feature values to the INR.

11. The method or the apparatus of claim 10, wherein reconstructing the part of the image or 3D object comprises applying a hash function to the input coordinates based on the obtained parameters, before mapping input coordinates to grid positions.

12. The method or the apparatus of claim 10 or 11, wherein reconstructing the part of the image or 3D object comprises applying a padding method to the grid if input coordinates are outside the grid or interpolating feature values if the input coordinates are in-between grid positions.

110                                                              120

100

FIG. 1

200

210

Input signal

Learn INR parameters        220

Encode INR
parameters              230

250

bitstream

FIG. 2

FIG. 3

FIG. 4

FIG. 5

601 coordinates                                    600

615 → | Map to grid position | 610    625 —————→ | Decode grid values | 620

635 → | Get feature values | 630

655 → | Interpolate | 650

Mapped features    660

FIG. 6

EP 4 672 755 A1

FIG. 8

EP 4 672 755 A1

700

Processor

710

Memory

720

FIG. 7

A ⟷ NET ⟷ B

FIG. 9

| H | PAYLOAD |

FIG. 10

# EUROPEAN SEARCH REPORT

**Application Number**

EP 24 30 6011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAETHRE JENS EIRIK ET AL: "Combining Frame and GOP Embeddings for Neural Video Representation", 2024 IEEE/CVF CONFERENCE ON COMPUTER VISION AND PATTERN RECOGNITION (CVPR), IEEE, 16 June 2024 (2024-06-16), pages 9253-9263, XP034697733, DOI: 10.1109/CVPR52733.2024.00884 [retrieved on 2024-09-16] * abstract, section 4; figure 3 * | 1-12 | INV. H04N19/70 G06N3/045 G06N3/0464 G06T9/00 |
| A | XINJIE ZHANG ET AL: "Boosting Neural Representations for Videos with a Conditional Decoder", ARXIV.ORG, CORNELL UNIVERSITY LIBRARY, 201 OLIN LIBRARY CORNELL UNIVERSITY ITHACA, NY 14853, 8 March 2024 (2024-03-08), XP091692333, * the whole document * | 1-12 | |
| A | SKYLAR WOLFGANG WURSTER ET AL: "Adaptively Placed Multi-Grid Scene Representation Networks for Large-Scale Data Visualization", ARXIV.ORG, CORNELL UNIVERSITY LIBRARY, 201 OLIN LIBRARY CORNELL UNIVERSITY ITHACA, NY 14853, 6 April 2024 (2024-04-06), XP091720939, DOI: 10.1109/TVCG.2023.3327194 * the whole document * | 1-12 | **TECHNICAL FIELDS SEARCHED (IPC)** H04N G06T G06N |

The present search report has been drawn up for all claims

| Place of search | Date of completion of the search | Examiner |
|---|---|---|
| Munich | 14 November 2024 | Cordara, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Non-patent literature cited in the description**

- **LADUNE 7** ; **PHILIPPE P** ; **HENRY F et al.** Cool-chic: Coordinate-based low complexity hierarchical image codec.. *Proceedings of the IEEE/CVF International Conference on Computer Vision*, 2023, 13515-13522